**Europäisches Patentamt**

**European Patent Office**

**Office européen des brevets**

(19)

(11) Publication number: **0 260 900**
**B1**

(12) # EUROPEAN PATENT SPECIFICATION

(45) Date of publication of the patent specification:
**14.11.90**

(51) Int. Cl.⁵: **F16C 1/26**

(21) Application number: **87308076.6**

(22) Date of filing: **11.09.87**

(54) Cable clip.

(30) Priority: **12.09.86 GB 8622027**

(43) Date of publication of application:
**23.03.88 Bulletin 88/12**

(45) Publication of the grant of the patent:
**14.11.90 Bulletin 90/46**

(84) Designated Contracting States:
**DE ES FR GB**

(56) References cited:
FR-A- 1 377 924
FR-A- 1 377 947
FR-A- 2 533 273
FR-A- 2 554 882
US-A- 4 185 515
US-A- 4 294 133

PATENT ABSTRACTS OF JAPAN, vol. 8,
no. 132 (M-303)[1569], 20th June 1984; &
JP-A-59 34 017 (NISSAN JIDOSHA K.K.) 24-02-1984

(73) Proprietor: **FORD MOTOR COMPANY LIMITED, Eagle
Way, Brentwood Essex CM13 3BW(GB)**
(84) Designated Contracting States: **GB**

(73) Proprietor: **FORD-WERKE AKTIENGESELLSCHAFT,
Werk Köln-Niehl Henry-Ford-Strasse Postfach 60 40 02,
D-5000 Köln 60(DE)**
(84) Designated Contracting States: **DE**

(73) Proprietor: **FORD FRANCE SOCIETE ANONYME,
344 Avenue Napoléon Bonaparte B.P. 307, F-92506 Rueil
Malmaison Cedex(FR)**
(84) Designated Contracting States: **FR**

(73) Proprietor: **FORD MOTOR COMPANY, County of Wayne,
Dearborn, MI 48120(US)**
(84) Designated Contracting States: **ES**

(72) Inventor: **Brightwell, David Leonard, 5 Broom Road,
Billericay Essex CM11 1ES(GB)**

(74) Representative: **Messulam, Alec Moses et al, A.
Messulam & Co. 24 Broadway, Leigh on Sea Essex
SS9 1BN(GB)**

## Description

The present invention relates to a clip for clamping the outer sheath of a Bowden cable.

The heater controls mounted on the dashboard of a motor vehicle are usually connected to the heater flaps and temperature regulating valve by means of Bowden cables. As with all such cables, it is necessary to clamp the ends of the outer sheaths of the cables near the temperature regulating valve, the heater flaps and the heater controls on the dashboard. It is also usual to provide a degree of adjustment at the anchorage points to enable free play in the cable to be taken up while allowing a full range of movement of the controls. The particular problem experienced in the case of cables used for the heater controls of a vehicle is that the rear of the control panel on the dashboard is not readily accessible and it is difficult to use any form of tool within the confined space available to carry out the required adjustment. It has for example been proposed to provide a grip which is screwed over the end of the cable to inhibit its movement but tightening the screw cannot be carried out easily.

The outer sheath of a Bowden cable is normally made of coiled wire and it has been proposed in GB-A 947 536 to take advantage of this construction to facilitate the clamping of the cable. The latter patent describes a resilient metal clip which urges the outer sheath against a curved support surface and having indentations which engage between the coils of the outer sheath to restrict its movement. The adjustment of the cable is effected by merely exerting a force sufficiently great to overcome the resistance presented by the indentations.

A disadvantage of this construction is that cable is held only by the resilience of the clip and and if the cable should become stiff after a time, then the clamping of outer sheath becomes inadequate.

A snap-in connector for a cable is also known from US 4 185 515 which has limbs between which the outer sheath of a cable can be gripped but in this case, axial movement of the cable along the clip is not reliably prevented.

French Patent No. 1 377 924 shows a clip essentially in the form of a pair of tongues, the ends of which have inwardly turned flanges which can engage between the coils of the outer sheath of a Bowden cable to prevent it from moving axially. If the tongues are first squeezed about the desired point on the cable and then inserted in a hole to prevent the limbs of the tongues from separating, then the cable is securely anchored and prevented from sliding axially along the clip. A disadvantage of such a clip is that assembly cannot be carried out with one hand. One hand must be used to locate the end of the cable while the other is used to position the clip on the cable prior to its insertion into the heater housing.

The invention seeks to provide a cable clip which can enable the outer sheath of a Bowden cable to be held securely in any one of a variety of positions without the need to use a tool and which facilitates assembly in confined spaces.

According to the present invention, there is provided a snap-on clip for clamping the outer sheath of a Bowden cable, the end of the outer sheath of the cable being provided with a plurality of transverse ribs arranged at regular intervals along the cable, the clip comprising a clamping member having a pair of resilient limbs defining an open channel for receiving and gripping the end of the cable, characterised in that the outer sheath has a first side defining said transverse ribs and a second side which is free of ribs, the inner surface of the channel has on its base ribs which interlock with the ribs on the first side of the outer sheath to prevent axial movement of the outer sheath relative to the clamping member, and in that barbs are provided on the resilient limbs for engaging the surface of said second side of the outer sheath remote from the ribs to prevent undesired withdrawal of the outer sheath from the channel of the clamping member.

In the invention, the outer sheath can be forced into the channel through the open mouth defined by the free ends of the limbs, the limbs yielding to permit the outer sheath to enter the channel. However, once in the channel, it is not possible to slide the outer sheath relative to the clamping member.

The clip of the invention offers the possibility of adjustment in that prior to snapping the outer sheath into the channel, the outer sheath may be moved axially to take up any slack or free play in the cable. The usual way of assembling such cables is to hold the regulating valve or the heater flap, as the case may be, in a position corresponding to an indicated setting on the dashboard control and to clamp the cable after having taken up free play while the dashboard control is held in the appropriate position. with the clip of the invention, the clamping of the outer sheath can be carried out without any tools and it is not even necessary to be able to see the end of the cable. After the inner cable has been suitably connected to the control, the outer sheath is merely pulled to take up slack and then snapped between the limbs of the channel member. Should readjustment be necessary, for any reason, this can only be effected by first withdrawing the outer sheath from the channel in the clamping member. A gripping portion may, if desired, be formed on the outer sheath to assist in such withdrawal of the outer sheath from the channel of the clamping member.

It is preferred that the end of the outer sheath (32) of the cable be provided with a sleeve on which are defined the first and second sides.

The ribbed sleeve may be formed as part of the outer sheath of the cable or be moulded about the outer sheath. Alternatively, the sleeve may be separately formed and secured to the outer sheath by an adhesive or other suitable bond.

The clamping may be formed as part of a heater box or of a dashboard control panel. Alternatively, the channel-shaped member may be formed separately and be secured to the anchoring surface, such as the heater box. For example, the clamping member may form part of a stud designed to be snapped into a hole in the heater box.

The invention will now be described further, by way of example, with reference to the accompanying drawings, in which:

Figure 1 is a perspective view of a clip of the invention with the components of the clip separated, and

Figure 2 shows an end view of the clip in an assembled state.

The clip in the drawings comprises a clamping member 10 having two pairs 12 and 14 of resilient limbs each pair defining between them a channel 16. The base of the channel 16 has regular ribs 18.

The clamping member 10 may be formed integrally with the element relative to which the outer sheath of the Bowden cable is to be clamped but in the case of the illustrated embodiment, it forms part of a self-locking stud designed to be inserted into a hole in a sheet 22, which may be a wall of the heater box.

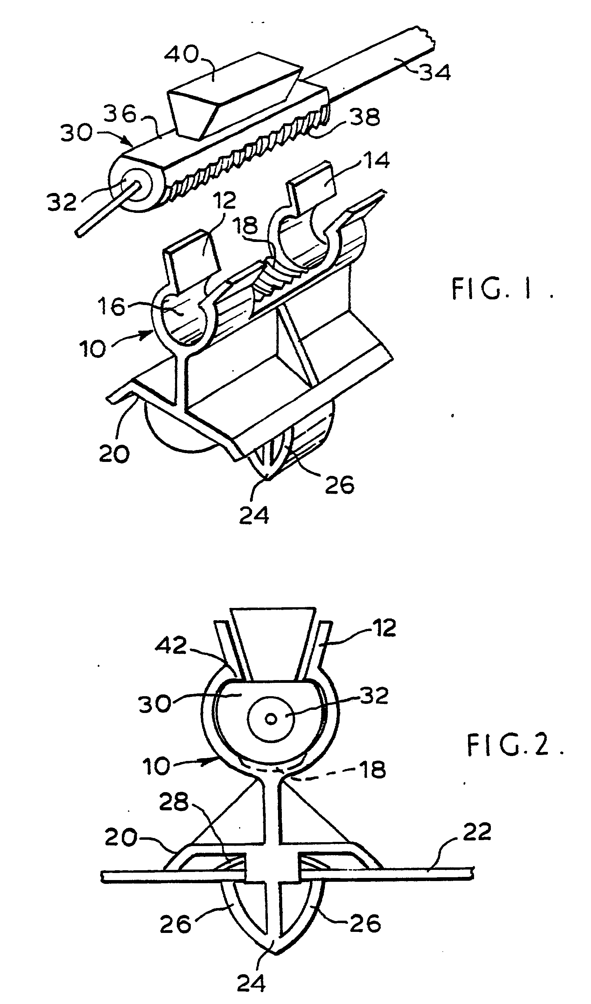

As is clearer from Figure 2, the stud constituting the clamping member 10 has a base 20 which is relatively rigid and rests against the surface of the sheet 22 into which it is inserted. A hook 24 with resilient prongs 26 depends from the under-side of the base 20 and is designed to pass through a hole in the sheet 22. After passing through the hole, the prongs 26 spread out and engage the rear surface of the sheet 22 to prevent withdrawal of the stud. A flexible membrane 28 formed integrally with the stud surrounds the hole in the sheet 22 to effect a seal.

A sleeve 30 is moulded onto the end of the outer sheath 32 of the cable 34. The sleeve 30 has a flat upper surface 36 and ribs 38 on its under-side, as viewed. A gripping portion 40 projects from the upper surface 36. When the sleeve is inserted in the channel 16 of the clamping member 10, the gripping portion 40 lies axially between the two pairs 12 and 14 of resilient limbs to permit the sleeve to be gripped in the event of its withdrawal from the channel 16 being necessary. The ribs 38 are complementary with the ribs 18 on the inner surface of the member 10 and when assembled the two sets of ribs interlock and prevent axial movement of the sleeve 30 in the member 10.

The resilient limbs 12 and 14 are formed with barbs 42 which engage the upper surface 36 of the sleeve 30. The resilient limbs 12 and 14 are spread apart when the sleeve 30 is forced in between them and after location of the sleeve 30 within the channel 16, the barbs 42 engage the flat surface 36 and prevent removal of the sleeve. The sleeve 30 can only be withdrawn from the channel 16 by prising the resilient limbs 12 and 14 apart. The outer sheath cannot be move axially without withdrawing the sleeve 30 from the channel 16. The outer sheath is therefore firmly clamped by merely snapping the outer sheath into the clamping member 10, an action which can be carried out with only one hand.

The sleeve can be forced into the channel 16 in a variety of different axial positions and in any of these positions it is firmly held against axial displacement by the interlocking engagement between the two sets of ribs 18 and 38.

The invention thus provides a clip which can be snapped into position and as such requires no special tools for its assembly. The clip clearly lends itself well to applications where access is restricted but there are other applications where the ease of assembly will be found desirable even when access is less severely restricted.

## Claims

1. A snap-on clip for clamping the outer sheath of a Bowden cable, the end of the outer sheath (32) of the cable (34) being provided with a plurality of transverse ribs (38) arranged at regular intervals along the cable, the clip comprising a clamping member (10) having a pair of resilient limbs (12) defining an open channel (16) for receiving and gripping the end of the cable, characterised in that the outer sheath (32) has a first side defining said transverse ribs (38) and a second side which is free of ribs, the inner surface of the channel (16) has on its base ribs (18) which interlock with the ribs (38) on the first side of the outer sheath (32) to prevent axial movement of the outer sheath (32) relative to the clamping member (10), and in that barbs (42) are provided on the resilient limbs (12, 14) for engaging the surface (36) of said second side of the outer sheath remote from the ribs (18) to prevent undesired withdrawal of the outer sheath from the channel (16) of the clamping member (10).

2. A clip as claimed in claim 1, characterised in that the end of the outer sheath (32) of the cable is provided with a sleeve (30) on which are defined said first and second sides.

3. A clip as claimed in claim 2, characterised in that the sleeve (30) is formed integrally with the sheath (32) of the cable (34).

4. A clip as claimed in claim 2 or 3, wherein the said second side of the sleeve is provided with a flat surface (36), the barbs (42) engaging said flat surface (36) and wherein a gripping portion (40) projects from said flat surface (36).

5. A clip as claimed in any preceding claim, characterised in the clamping member (10) forms part of a stud designed to be inserted into a hole in a sheet relative to which the outer sheath is to be clamped and to be self-locking in the hole.

6. A clip as claimed in any one of claims 1 to 4, characterised in that the clamping member is formed integrally with a body, such as a heater box or a dashboard control panel, relative to which the outer sheath is to be clamped.

## Patentansprüche

1. Schnappklemme, um die äußere Hülle eines Bowdenkabels festzuklemmen, wobei das Ende der äußeren Hülle (32) des Kabels (34) mit einer Vielzahl von in regelmäßigen Abständen am Kabel entlang angeordneten Querrippen (38) versehen ist, wobei die Klemme ein Klemmelement (10) mit einem Paar elastischer Schenkel (12) umfaßt, die einen offenen Kanal (16) begrenzen, in dem das Kabelende aufgenommen und fest ergriffen wird, dadurch gekennzeichnet, daß die äußere Hülle (32) eine erste, jene Querrippen (38) begrenzende Seite und eine zweite rippenfreie Seite aufweist, die Innenfläche des Kanals (16) an ihrem Boden Rippen (18) aufweist, die zur Verhinderung axialer Bewegung der äußeren Hülle (32) bezüglich des Klemmelementes (10) mit den Rippen (38) an der ersten Seite der äußeren Hülle (32) verriegeln, und daß an den elastischen Schenkeln (12, 14) Haken (42) vorgesehen sind, um die Fläche (36) jener zweiten, von den Rippen (18) entfernt liegenden Seite der äußeren Hülle in Eingriff zu nehmen, um zu verhindern, daß die äußere Hülle in unerwünschter Weise aus dem Kanal (16) des Klemmelementes (10) herausgezogen wird.

2. Klemme nach Anspruch 1, dadurch gekennzeichnet, daß das Ende der äußeren Hülle (32) des Kabels mit einer Hülse (30) versehen ist, an der jene erste und zweite Seite festgelegt sind.

3. Klemme nach Anspruch 2, dadurch gekennzeichnet, daß die Hülse (30) einstückig mit der Hülle (32) des Kabels (34) geformt ist.

4. Klemme nach Anspruch 2 oder 3, bei der jene zweite Seite der Hülse mit einer flachen Fläche (36) versehen ist, die von jenen Haken (42) in Eingriff genommen wird und bei der ein Greifteil (40) von jener flachen Fläche (36) absteht.

5. Kleimme nach einem der vorhergehenden Ansprüche, dadurch gekennzeichnet, daß das Klemmielement (10) Teil eines Stehbolzens ist, der in ein Loch in einem Flächengebilde eingeführt werden soll, bezüglich dessen die äußere Hülle festzuklemmen ist und sich in dem Loch selbstverriegeln soll.

6. Klemme nach einem der Wsprüche 1 bis 4, dadurch gekennzeichnet, daß das Klemmelement einstückig mit einem Körper wie einem Heizungsgehäuse oder einem Steuerfeld an einem Armaturenbrett geformt ist, bezüglich dessen die äußere Hülle festzuklemmen ist.

## Revendications

1. Agrafe emboîtable par déclic pour serrer la gaine extérieure d'un câble Bowden, l'extrémité de la gaine extérieure (32) dudit câble (34) étant munie de multiples nervures transversales (38) agencées à des intervalles réguliers le long du câble, l'agrafe présentant une pièce de serrage (10) dotée d'une paire de fourchons élastiques (12) délimitant un canal ouvert (16), pour recevoir et enserrer l'extrémité du câble, caractérisée par le fait que la gaine extérieure (32) comprend un premier côté matérialisant lesdites nervures transversales (38), et un second côté dépourvu de nervures, la surface interne du canal (16) comportant, sur sa base, des nervures (18) en coopération interactive avec les nervures (38) du premier côté de la gaine extérieure (32), pour empêcher un mouvement axial de cette gaine extérieure (32) par rapport à la pièce de serrage (10); et par le fait que des becs (42) sont prévus, sur les fourchons élastiques (12, 14), pour venir en prise avec la surface, (36) dudit second côté de la gaine extérieure, tourné à l'opposé des nervures (18), afin d'empêcher une extraction inopportune de la gaine extérieure hors du canal (16) de la pièce de serrage (10).

2. Agrafe de retenue selon la revendication 1, caractérisée par le fait que l'extrémité de la gaine extérieure (32) du câble est pourvue d'une douille (30) sur laquelle lesdits premier et second côtés sont définis.

3. Agrafe de retenue selon la revendication 2, caractérisée par le fait que la douille (30) est ménagée d'un seul tenant avec la gaine (32) du câble (34).

4. Agrafe de retenue selon la revendication 2 ou 3, dans laquelle ledit second côté de la douille est muni d'une face aplatie (36), les becs (42) venant en prise avec ladite face aplatie (36); et dans laquelle une zone de préhension (40) dépasse au-delà de ladite face aplatie (36).

5. Agrafe de retenue selon une quelconque revendication précédente, caractérisée par le fait que la pièce de serrage (10) forme partie intégrante d'un tenon, conçu pour être introduit dans un trou pratiqué dans une tôle par rapport à laquelle la gaine extérieure doit être serrée, et pour assurer un autoverrouillage dans le trou.

6. Agrafe de retenue selon l'une quelconque des revendications 1 à 4, caractérisée par le fait que la pièce de serrage est ménagée d'un seul tenant avec un corps, tel qu'un collecteur de chauffage ou un panneau de commande du tableau de bord, par rapport auquel la gaine extérieure doit être serrée.

FIG. 1.

FIG. 2.